# EUROPEAN PATENT APPLICATION

(11) **EP 2 458 356 A2**
(43) Date of publication of application: **30.05.2012**
(21) Application number: 11190189.8
(22) Date of filing: 22.11.2011
(51) Int. Cl.: G01K 7/42, G01K 13/00

(54) **Temperature measuring device**

(30) Priority: 24.11.2010 JP 2010261265
(71) Applicant: Citizen Holdings Co., Ltd., Nishitokyo-shi, Tokyo 188-8511 (JP)
(72) Inventor: Tsuchida, Masato, Tokyo, 188-8511 (JP); Muramatsu, Masahiro, Tokyo, 188-8511 (JP)
(74) Representative: Michalski Hüttermann & Partner

(57) **Abstract**

In order to improve precision in measuring a deep body temperature by suppressing a heat flux in a plane direction while achieving satisfactory contact between a temperature sensing element and a skin, there is provided a temperature measuring device (1) including: temperature sensing elements (31a, 31b, and 32a to 32h) provided to at least one of inlets (21a to 25a) and outlets (21b to 21b) of first and second heat flow path members (21 to 25), respectively; and a casing (11) having a lower thermal conductivity than thermal conductivities of the first and second heat flow path members (21 to 25) , for supporting the first and second heat flow path members (21 to 25), in which a gaseous layer or a vacuum layer (12) is formed among the first and second heat flow path members (21 to 25) .

## Description

### BACKGROUND OF THE INVENTION

### 1. Field of the Invention

The present invention relates to a temperature measuring device including a heat flow path member and a temperature sensing element, for estimating a deep body temperature from temperature information on a body surface, in particular, a temperature measuring device for measuring a deep body temperature with high precision by suppressing a heat flux from a heat flow path member in a plane direction, that is, a leakage of a heat flow from the heat flow path member.

### 2. Description of the Related Art

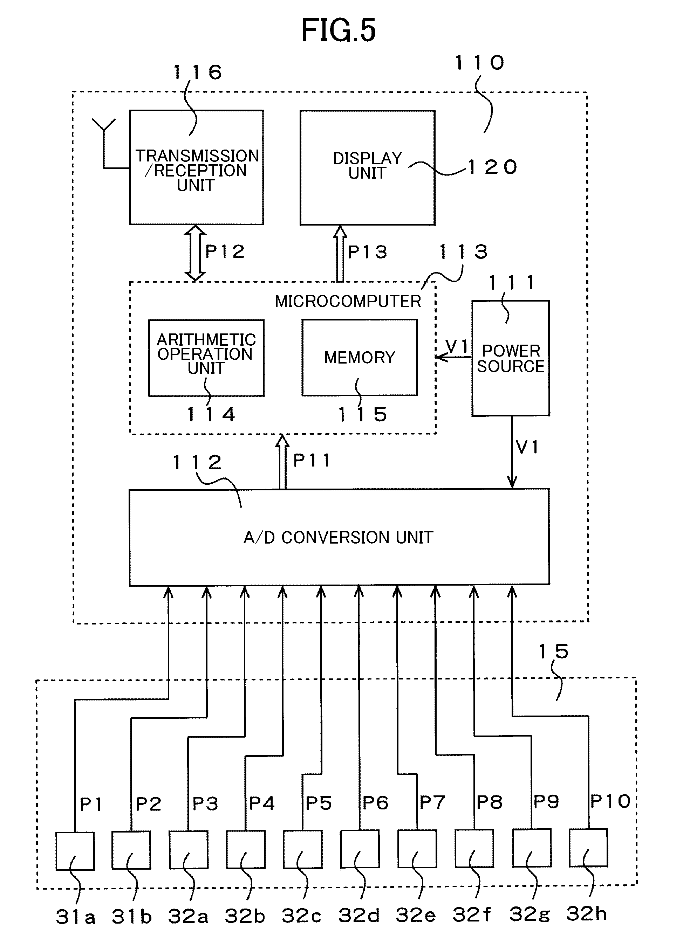

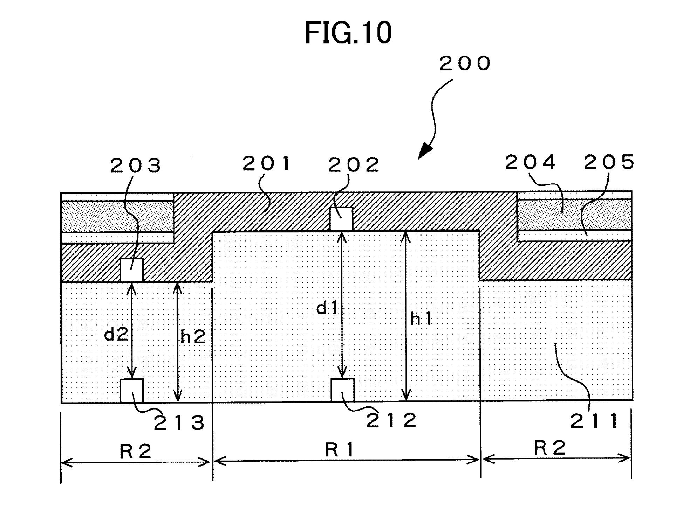

Up to now, for example, JP 2007-315917 A discloses, in page 6 and FIG. 5C, a deep temperature measuring device including a deep temperature probe and a communication display device. Hereinafter, referring to FIG. 10, description is made of an outline of the conventional deep temperature measuring device disclosed in JP 2007-315917 A.

In FIG. 10, IC tags 202 and 203 with temperature sensors are located inside a metallic material portion 201 of a deep temperature probe 200. Therefore, temperatures detected by the IC tags 202 and 203 with temperature sensors correspond to the temperature of the metallic material portion 201 (substantially the same as the outside air temperature) . Further, a rigid foamed material 211 that is a heat insulating material is located as a layer below the metallic material portion 201, and IC tags 212 and 213 with temperature sensors are located inside the rigid foamed material 211. The rigid foamed material 211 is segmented into an area R1 having a height h1 and an area R2 having a height h2.

An electromagnetic wave coupling layer 204 and a wiring substrate 205 are located around the metallic material portion 201. The wiring substrate 205 is connected to a wiring from the respective IC tags with temperature sensors and allows communication with an external device. Further, an interval between the IC tags with temperature sensors that are located so as to be opposed to each other across the rigid foamed material 211 in a vertical direction is defined as follows. Assuming that the interval between the IC tags 202 and 212 with temperature sensors is set as d1 and the interval between the IC tags 203 and 213 with temperature sensors is set as d2, a relationship of d1>d2 is established between d1 and d2.

It is disclosed that under this condition, the deep temperature probe 200 is brought into contact with a skin, temperatures at respective measurement points are measured by the respective IC tags with temperature sensors, and the deep body temperature is obtained by a calculation using a finite element method in two dimensions (cross-section). Further, the deep temperature probe 200 has a function of transmitting the result of the measurement to an external communication device in a wireless manner.

However, in the deep temperature probe of the deep temperature measuring device of JP 2007-315917 A, as illustrated in FIG. 10, the rigid foamed material 211 being a heat insulating material is integrally formed to have a uniform thermal resistance, which causes a plurality of heat flow paths to be formed inside the heat insulating material. Therefore, the heat flow paths in a plane direction exist inside the heat insulating material, which raises a problem that the heat flows affect one another to cause an error in calculation of a deep temperature. Further, downsizing of the probe brings the heat flowpaths into proximity to one another, which further increases the influence and leads to a problem of increase in the error.

### SUMMARY OF THE INVENTION

An object of the present invention is to solve the above-mentioned problems and to provide a temperature measuring device which suppresses a heat flux from a heat flow path member in a plane direction, that is, a leakage of a heat flow from the heat flow path member to thereby improve precision in measuring a deep body temperature.

In order to achieve the above-mentioned object, the temperature measuring device according to the present invention adopts the following structures.
(1) A temperature measuring device, including: a first heat flow path member; a second heat flow path member; temperature sensing elements provided to at least one of an inlet and an outlet of the first heat flow path member and at least one of an inlet and an outlet of the second heat flow path member; and a casing having a lower thermal conductivity than a thermal conductivity of the first heat flow path member and a thermal conductivity of the second heat flow path member, for supporting the first heat flow path member and the second heat flow path member, in which one of a gaseous layer and a vacuum layer is formed between the first heat flow path member and the second heat flow path member.
(2) The temperature measuring device according to the above-mentioned item (1), further including: a pair of first temperature sensing elements that are opposed to each other at the inlet and the outlet of the first heat flow path member; and a pair of second temperature sensing elements that are opposed to each other at the inlet and the outlet of the second heat flow path member.
(3) The temperature measuring device according to the above-mentioned item (2), in which: the second heat flow path member includes a plurality of second heat flow path members; and the plurality of second heat flow path members and the first heat flow path member are thermally isolated from one another by the casing.
(4) The temperature measuring device according to the above-mentioned item (2), in which: the second heat flow path member is integrally formed to have a ring shape; and the second heat flow path member and the first heat flow path member are thermally isolated from each other by the casing.
(5) The temperature measuring device according to any one of the above-mentioned items (1) to (4), in which the casing is made of a polystyrene foam.
(6) The temperature measuring device according to any one of the above-mentioned items (1) to (5), in which: the inlets of the first heat flow path member and the second heat flow path member each include a surface that is brought into contact with an object to be measured; and the first temperature sensing element and the second temperature sensing element that are provided to the inlets are thermally coupled to skin contact plates made of a metallic material.
(7) The temperature measuring device according to the above-mentioned item (6), in which the skin contact plates are independently disposed on the first temperature sensing element and the second temperature sensing element on a one-to-one basis.
(8) The temperature measuring device according to any one of the above-mentioned items (1) to (7), in which: the pair of second temperature sensing elements include a plurality of pairs of second temperature sensing elements; a measured value of a second temperature sensing element that has measured the highest temperature among the plurality of pairs of second temperature sensing elements is employed as the measured value of the second temperature sensing element; and the measured value of the second temperature sensing element, the measured value of the first temperature sensing element, and a thermal resistance ratio between the first heat flow path member and the second heat flow path member are used to calculate a deep temperature.

As described above, according to the present invention, the heat flow path members (heat insulating materials) corresponding to the temperature sensing elements are independently disposed, and the casing having a low thermal conductivity thermally isolates the heat flow path members from each other, which can suppress the heat flux from the heat flow path member in a plane direction to thereby enable temperature measurement with reduced errors. As a result, precision in calculating the deep body temperature improves, and it is possible to provide a temperature measuring device for measuring a deep body temperature with high precision.

### BRIEF DESCRIPTION OF THE DRAWINGS

In the accompanying drawings:
FIG. 1A is a perspective view illustrating a structure of a temperature measuring device according to a first embodiment of the present invention;
FIG. 1B is a sectional view illustrating the structure of the temperature measuring device according to the first embodiment of the present invention;
FIG. 2 is a perspective view illustrating a back surface of a temperature measuring unit of the temperature measuring device according to the first embodiment of the present invention;
FIG. 3 is a perspective view illustrating a control unit that is directly connected to the temperature measuring unit of the temperature measuring device according to the first embodiment of the present invention;
FIG. 4 is a perspective view illustrating a control unit that is connected by a cable to the temperature measuring unit according to the first embodiment of the present invention;
FIG. 5 is a block diagram illustrating an internal configuration of the temperature measuring device according to the first embodiment of the present invention;
FIG. 6 is an explanatory diagram illustrating an equivalent circuit of the temperature measuring device according to the first embodiment of the present invention and an expression for calculating a deep temperature;
FIG. 7 is a flowchart illustrating an operation of the temperature measuring device according to the first embodiment of the present invention;
FIG. 8A is a perspective view illustrating a structure of a temperature measuring device according to a second embodiment of the present invention when viewed obliquely from above;
FIG. 8B is a perspective view illustrating the structure of the temperature measuring device according to the second embodiment of the present invention when viewed obliquely from below (from a back surface thereof);
FIG. 9A is a perspective view illustrating a structure of a temperature measuring device according to a third embodiment of the present invention;
FIG. 9B is a sectional view illustrating the structure of the temperature measuring device according to the third embodiment of the present invention; and
FIG. 10 is a sectional view illustrating a structure of a probe of a conventional deep temperature measuring device.

### DETAILED DESCRIPTION OF THE INVENTION

Hereinafter, embodiments of the present invention are described in detail with reference to the accompanying drawings.

### [Features of respective embodiments]

A feature of a first embodiment is that a casing for isolating first and second heat flow path members from one another includes air layers excellent in heat insulation. A feature of a second embodiment is that the casing for isolating the heat flow path members from one another is made of a polystyrene foam having a high thermal resistor. A feature of a third embodiment, which is a simplified version of the first embodiment, is that the second heat flow path member is integrally formed to have a ring shape.

### (First embodiment)

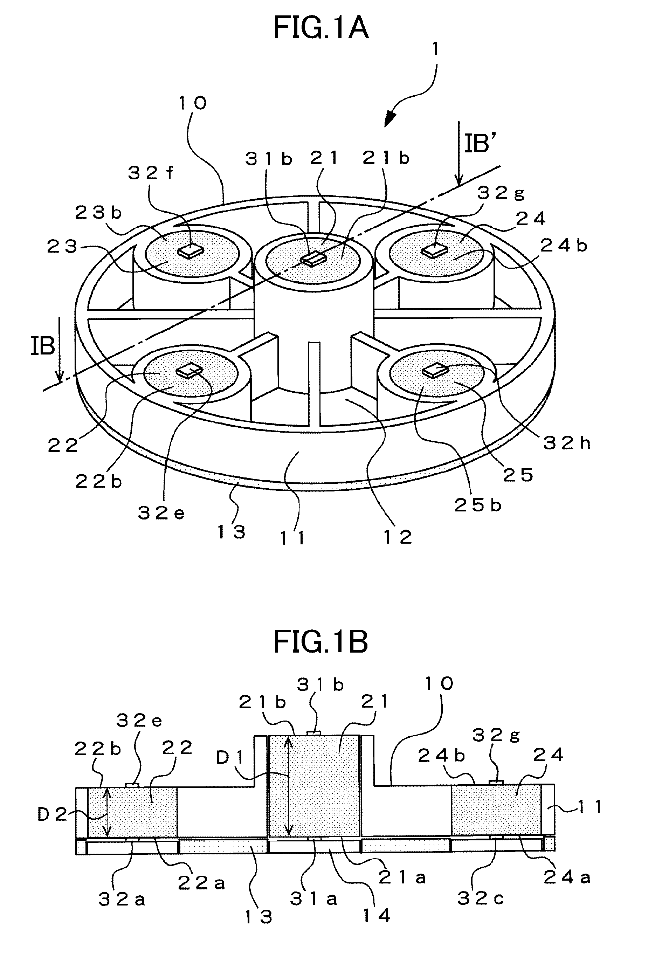

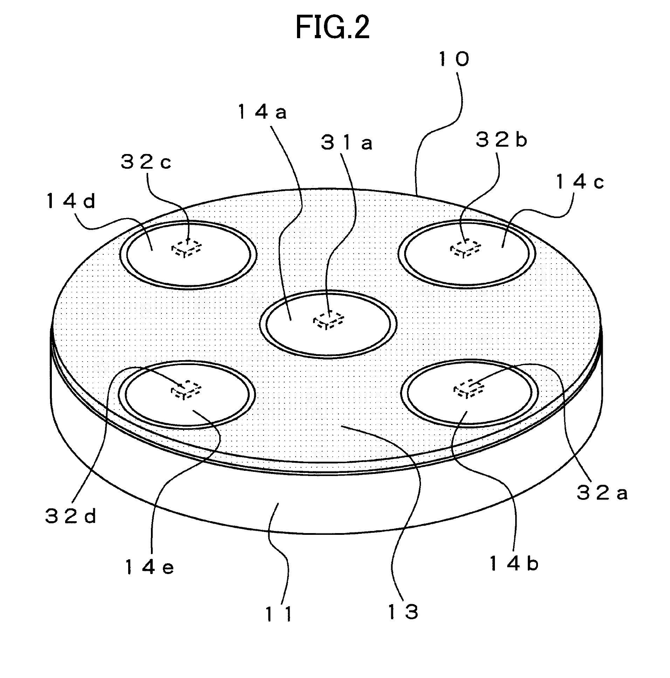

### [Description of structure of temperature measuring device according to first embodiment: FIG. 1A, FIG. 1B, and FIG. 2]

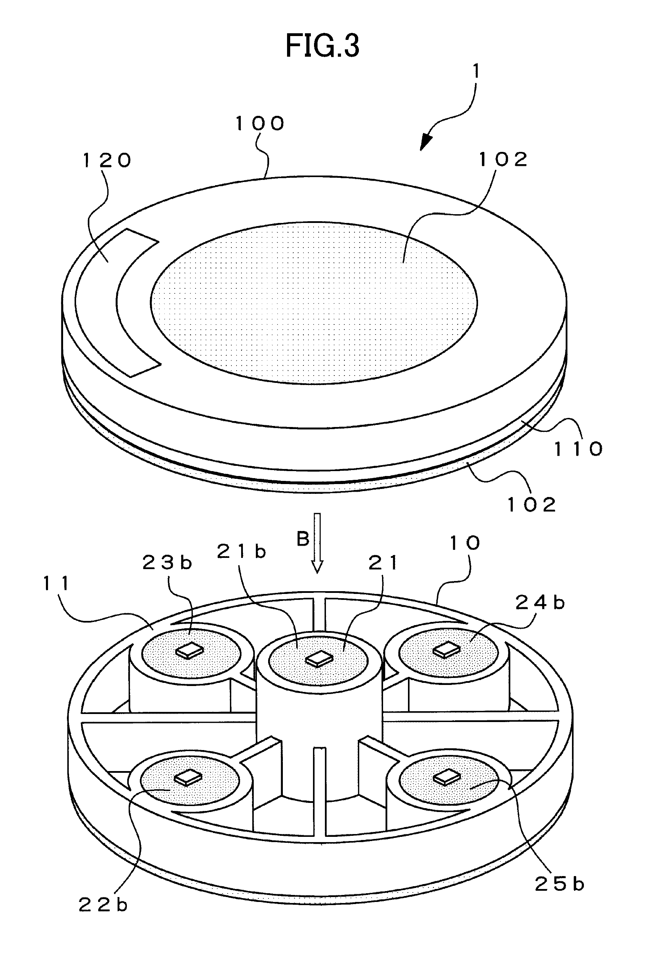

Referring to FIG. 1A and FIG. 1B, description is made of a structure of a temperature measuring device according to the first embodiment. FIG. 1A is a perspective view of the temperature measuring device according to the first embodiment, and FIG. 1B is a sectional view illustrating a section of a temperature measuring unit of FIG. 1A taken along the cutting plane line IB-IB' that passes through its center. In FIG. 1A and FIG. 1B, a temperature measuring device 1 according to the first embodiment includes a temperature measuring unit 10 for measuring a temperature of an object to be measured (not shown) in contact therewith and a control unit (see FIG. 3) described later.

The temperature measuring unit 10 is structured of a casing 11, a first heat flow path member (heat insulating material) 21 located substantially at the center of the casing 11, four second heat flowpathmembers 22 to 25 disposed so as to surround the periphery of the first heat flow path member 21, first temperature sensing elements 31a and 31b, second temperature sensing elements 32a to 32h, and the like. Note that, some of the temperature sensing elements are not illustrated here.

As illustrated in the figure, the casing 11 has a circular frame shape, and an internal portion of the casing 11 includes cavities formed of air layers 12. A material of the casing 11 has a thermal conductivity lower than a thermal conductivity of the first heat flow path member 21 and thermal conductivities of the second heat flow path members 22 to 25, and it is preferred to employ a rigid urethane foam, a polyvinyl chloride foam, or the like that is easy to mold. Note that, the shape of the casing 11 is arbitrary, and the present invention is not limited thereto.

The first heat flow path member 21 is a cylindrical thermal resistor having a predetermined thermal conductivity, and has an inlet 21a of a heat flow path on the lower side in the figures and an outlet 21b of the heat flow path on the upper side in the figures. The second heat flow path members 22 to 25 are each a cylindrical thermal resistor having a predetermined thermal conductivity as well, and have inlets 22a to 25a of heat flow paths on the lower side in the figures and outlets 22b to 25b of the heat flow paths on the upper side in the figures. Note that, the inlet 21a of the first heat flow path member 21 and the inlets 22a to 25a of the second heat flow path members 22 to 25 are surfaces that are brought into contact with a skin of a subj ect being an obj ect to be measured.

Here, as illustrated in the figures, the first heat flow path member 21 is held in the casing 11 and located substantially at the center of the casing 11. Further, the four second heat flow path members 22 to 25 are held in the casing 11 at even intervals so as to surround the first heat flow path member 21. Further, the first heat flow path member 21 located substantially at the center of the casing 11 has a thickness D1 set twice as large as a thickness D2 of the second heat flow path members 22 to 25. Therefore, the temperature measuring unit 10 has a convex shape that is tall in its central portion.

With this structure, the first heat flow path member 21 and the second heat flow path members 22 to 25 are mechanically isolated from one another by the casing 11, and the air layers 12 are formed among the respective heat flow path members. Here, the air layer 12 has an extremely low thermal conductivity, and hence the first heat flow path member 21 and the second heat flow path members 22 to 25 are thermally isolated from one another by the casing 11 and the air layers 12. Note that, it is possible to obtain a further increase in thermal isolation (heat insulation) among the first heat flow path member 21 and the second heat flow path members 22 to 25 by evacuating the air layers 12. Note that, a gas that fills the air layers 12 is not limited to air and may be any arbitrary gas containing an inert gas or the like, and the air layers 12 can be a gaseous layer or a vacuum layer. Further, the four second heat flow path members 22 to 25 are provided in the first embodiment, but the number of second heat flow path members is not limited to four, and an arbitrary number of heat flow path members which is equal to or larger than two can be provided.

Next, the first temperature sensing element 31a is disposed in contact with the inlet 21a of the first heat flow path member 21, and the first temperature sensing element 31b is disposed in contact with the outlet 21b of the first heat flow path member 21. Therefore, the first temperature sensing elements 31a and 31b are disposed as a pair of temperature sensing elements that are opposed to each other at the inlet 21a and the outlet 21b of the first heat flow path member 21.

Further, the second temperature sensing elements 32a to 32d (32b and 32d are not shown in FIG. 1A or FIG. 1B) are disposed in contact with the inlets 22a to 25a of the second heat flow path members 22 to 25, respectively, and the second temperature sensing elements 32e to 32h are disposed in contact with the outlets 22b to 25b of the second heat flow path members 22 to 25, respectively. Therefore, the second temperature sensing elements 32a to 32d and 32e to 32h are disposed so as to be opposed to each other across the second heat flow path members 22 to 25, respectively.

That is, the second temperature sensing elements 32a and 32e are disposed as a pair of temperature sensing elements that are opposed to each other at the inlet and the outlet of the second heat flow path member 22, the second temperature sensing elements 32b and 32f are disposed as a pair of temperature sensing elements that are opposed to each other at the inlet and the outlet of the second heat flow path member 23, the second temperature sensing elements 32c and 32g are disposed as a pair of temperature sensing elements that are opposed to each other at the inlet and the outlet of the second heat flow path member 24, and the second temperature sensing elements 32d and 32h are disposed as a pair of temperature sensing elements that are opposed to each other at the inlet and the outlet of the second heat flow path member 25.

Therefore, five pairs of the first and second temperature sensing elements are provided, and the number of temperature sensing elements is ten in total. Note that, all the ten temperature sensing elements are implemented on an FPC so as to be disposed in their respective positions, but the illustration of the FPC is omitted in order to avoid the drawings frombecoming complicated. Note that, it is preferred that the first and second temperature sensing elements be provided as chip-type thermistors, but the first and second temperature sensing elements may be temperature sensors of another type.

Further, FIG. 1B illustrates a plate-like heat insulating material 13 having a low thermal conductivity, which supports a back surface of the casing 11. Further, FIG. 1B illustrates a plurality of skin contact plates 14 made of a metallic material having a high thermal conductivity, which are brought into contact with and thermally coupled to the first temperature sensing element 31a and the second temperature sensing elements 32a to 32d. Note that, the heat insulating material 13 and the skin contact plates 14 are described later in detail with reference to FIG. 2.

Next, FIG. 2 is a perspective view of a back side of the temperature measuring unit 10 of the temperature measuring device according to the first embodiment. As illustrated in FIG. 2, a back surface of the temperature measuring unit 10 is mostly covered with the heat insulating material 13 having a large thermal resistance. The heat insulating material 13 has portions hollowed in a position of the above-mentioned inlet 21a of the first heat flow path member 21 and in positions of the above-mentioned inlets 22a to 25a of the second heat flow path members 22 to 25 in accordance with sizes of the respective inlets, and the skin contact plates 14a to 14e are disposed in contact with those portions.

That is, the skin contact plates 14a to 14e are independently disposed in positions corresponding to the first heat flow path member 21 and the second heat flow path members 22 to 25, and inner sides thereof are brought into contact with and thermally coupled to the first temperature sensing element 31a and the second temperature sensing elements 32a to 32d (which are indicated by the broken lines) on a one-to-one basis. Further, the skin contact plates 14a to 14e are partitioned by the heat insulating material 13 having a large thermal resistance, and hence the skin contact plates 14a to 14e are thermally isolated from one another. Note that, in the following description, the skin contact plates are referred to collectively as the skin contact plates 14 as appropriate.

With this structure, when body temperature measurement is performed by bringing the back surface of the temperature measuring unit 10 into close contact with the skin (not shown) of the subject, the respective skin contact plates 14 are brought into contact with the skin of the subject, and a body temperature of the skin of the subject is efficiently transmitted to the first temperature sensing element 31a and the second temperature sensing elements 32a to 32d via the skin contact plates 14.

Further, in the same manner, the skin contact plates 14 are respectively brought into contact with the inlet 21a of the first heat flow path member 21 and the inlets 22a to 25a of the second heat flow path members 22 to 25, and hence the body temperature of the skin of the subject is efficiently transmitted to the first heat flow path member 21 and the second heat flow path members 22 to 25 via the skin contact plates 14. Further, the skin contact plates 14 are thermally isolated from one another by the heat insulating material 13, which can inhibit the heat from being transmitted to the skin contact plates 14 in a plane direction.

In this manner, the skin contact plates 14 are independently provided and thermally isolated from one another. Therefore, even if the skin contact plates 14 include a skin contact plate that cannot sufficiently transmit the body temperature to the corresponding temperature sensing element due to insufficient contact with the skin, the skin contact plate does not affect the other skin contact plates, and the respective skin contact plates 14 can transmit a heat flow from the skin to the corresponding temperature sensing element and heat flow path member on a one-to-one basis. This allows selection of the skin contact plate with the temperature sensing element whose contact state with the skin is most satisfactory, and it is possible to achieve deep body temperature measurement that is stable and is hardly affected by the contact state with the skin or the ambient environment.

### [Description of control unit of temperature measuring device according to first embodiment: FIG. 3]

Next, referring to FIG. 3, description is made of a control unit of the temperature measuring device according to the first embodiment. FIG. 3 illustrates an example in which the temperature measuring unit and the control unit are formed integrally with each other, but for the simplicity of description, the temperature measuring unit and the control unit of the temperature measuring device are illustrated as separated from each other.

FIG. 3 illustrates a control unit 100 of the temperature measuring device according to the first embodiment. The control unit 100 is integrally connected to the temperature measuring unit 10 by being fitted over the temperature measuring unit 10 from the upper side in a direction indicated by the arrow B. The control unit 100 has a ring shape with the central portion hollowed so as to avoid the tall first heat flow path member 21 provided at the center of the temperature measuring unit 10. This shape can suppress the thickness of the device to a low level when the temperature measuring unit 10 and the control unit 100 are integrally connected to each other.

The control unit 100 includes a printed board 110 having a ring shape, on which an electronic circuit and a power source are disposed as described later, and a display unit 120 for displaying a measured temperature (body temperature). Further, heat insulating materials 102 are disposed on an under surface of the control unit 100 and a top surface of an inner diameter thereof. That is, the heat insulating materials 102 are brought into contact with the above-mentioned outlet 21b of the first heat flow path member 21 and the above-mentioned outlets 22b to 25b of the second heat flow path members 22 to 25, thereby enabling such a structure as to prevent heat that has passed through the respective heat flow path members from diffusing from the outlets. Here, the temperature measuring unit 10 has a convex shape that is tall in its central part because of the large thickness of the first heat flow path member 21, and the heat insulatingmaterial 102 has such a concave-down shape as to be fitted over the convex shape.

Further, for electrical connection between the temperature measuring unit 10 and the control unit 100, the FPC on which the respective temperature sensing elements are implemented is extended to be connected to the printed board 110 of the control unit 100, but the illustration of the FPC is omitted. Note that, an internal configuration and an operation of the control unit 100 are described later.

By thus integrating the temperature measuring unit 10 with the control unit 100, it is possible to obtain a temperature measuring device which is easy to handle and can measure a deep body temperature with ease.

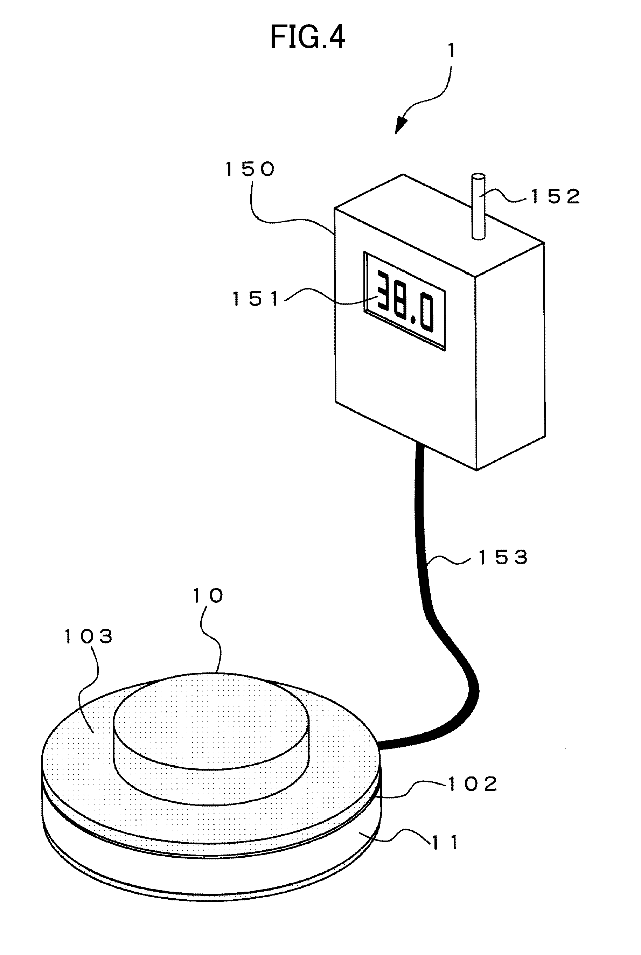

### [Description of separate-type control unit of temperature measuring device according to first embodiment: FIG. 4]

Next, referring to FIG. 4, description is made of an example in which a control unit of the temperature measuring device according to the first embodiment is of a separate type and is connected to the temperature measuring unit by a cable. In FIG. 4, the temperature measuring unit 10 has a cover 103 disposed on a top surface of the casing 11, into which the temperature sensing elements and the like are incorporated, so as to cover the entire top surface of the casing 11 via the heat insulating materials 102. Note that, although not shown, the cover 103 may cover a side surface of the casing 11 and a part of the back surface.

A control unit 150 of the temperature measuring device 1 is of a separate type, and is internally provided with a power source, an electronic circuit, and the like, including a display unit 151 for displaying a measured temperature and, as necessary, an antenna 152 for communicating with an external device (notshown) in a wireless manner. The temperature measuring unit 10 and the control unit 150 are electrically connected to each other by a cable 153, and respective pieces of temperature information are transmitted from the first temperature sensing elements 31a and 31b and the second temperature sensing elements 32a to 32h of the temperature measuring unit 10 to the control unit 150 via the cable 153.

In this manner, by separating the temperature measuring unit 10 for measuring the body temperature of the subj ect from the control unit 150 provided with the power source and the display unit, the temperature measuring unit 10 becomes smaller and lighter in weight, which allows continuous measurement of the deep body temperature with the temperature measuring unit 10 attached to the body of the subject at all times.

### [Description of internal configuration of temperature measuring device according to first embodiment: FIG. 5]

Next, referring to the block diagram of FIG. 5, description is made of an internal configuration of the temperature measuring device according to the first embodiment. Note that, as preconditions for the description, it is assumed that the control unit according to the first embodiment employs the type illustrated in FIG. 3 in which the temperature measuring unit and the control unit are integrated with each other, but the separate-type illustrated in FIG. 4 basically has the same internal configuration as well.

In FIG. 5, ten temperature sensing elements of the first temperature sensing elements 31a and 31b and the second temperature sensing elements 32a to 32h are implemented on an FPC 15 of the temperature measuring unit 10. The FPC 15 is connected to the printed board 110 of the control unit 100 (see FIG. 3), and ten temperature signals P1 to P10 that are output from the first temperature sensing elements 31a and 31b and the second temperature sensing elements 32a to 32h are transmitted to the printed board 110 by wiring patterns of the FPC 15.

On the other hand, disposed on the printed board 110 are a power source 111 being a small-size secondary battery, an A/D conversion unit 112, a microcomputer 113, a transmission/reception unit 116 including an antenna, the display unit 120, and the like. Note that, the A/D conversion unit 112 may be built into the microcomputer 113, or may be implemented on the FPC 15 of the temperature measuring unit 10.

The power source 111 outputs a power supply voltage V1 for driving the A/D conversion unit 112 and the microcomputer 113. Note that, although not shown, the power supply voltage V1 is also supplied to the transmission/reception unit 116 and the display unit 120. The A/D conversion unit 112 receives the temperature signals P1 to P10 as inputs, converts analog information into digital information, and outputs temperature data P11 being digital data to the microcomputer 113.

The microcomputer 113 incorporates an arithmetic operation unit 114 and a memory 115, receives the temperature data P11 as inputs, calculates a deep body temperature based on an arithmetic expression described later, and outputs a display signal P13 to display the deep body temperature. Further, the microcomputer 113 outputs a communication signal P12 to transmit information on the calculated deep body temperature to the external device.

The display unit 120 is constituted of a small-size liquid crystal panel, receives the display signal P13 as an input, and displays the temperature information. Further, the transmission/reception unit 116 receives the communication signal P12 as an input, and transmits the information on the deep body temperature to the external device (not shown) in a wireless manner. Further, the transmission/reception unit 116 can receive a control signal from the external device, transmit the control signal to the microcomputer 113, and perform remote control of starting and stopping of temperature measurement, calculation of the deep body temperature, and the like. Further, it is not necessary to provide both the transmission/reception unit 116 and the display unit 120. For example, the transmission/reception unit 116 is unnecessary unless communication is performed with the external device, while the display unit 120 is unnecessary if the measured temperature information is transmitted to the external device to allow the external device to confirm the temperature information at all times.

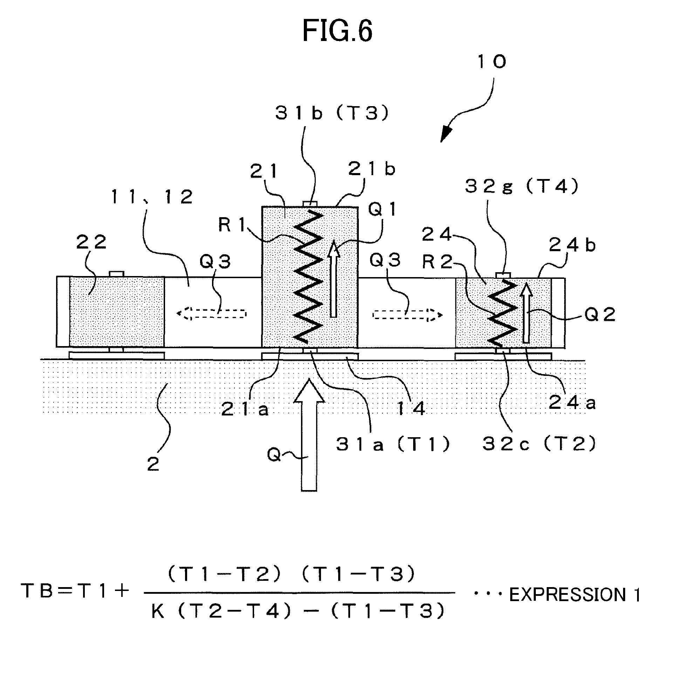

### [Method of calculating deep body temperature by temperature measuring device according to first embodiment: FIG. 6]

Next, a method of calculating a deep body temperature by the temperature measuring device according to the first embodiment is described with reference to an equivalent circuit of FIG. 6 and an expression for calculating a deep temperature. Here, the equivalent circuit of FIG. 6 is provided based on the structure of the temperature measuring unit 10 (see FIG. 1A and FIG. 1B) according to the first embodiment. Further, for the simplicity of description, with regard to the plurality of second heat flow path members and the plurality of second temperature sensing elements, description is made only of the second heat flow path member 24, the second temperature sensing element 32c in contact with the inlet 24a thereof, and the second temperature sensing element 32g in contact with the outlet 24b thereof.

In FIG. 6, when the temperature measuring unit 10 is brought into close contact with a skin 2 of the subject in order to measure the deep body temperature, a heat flow Q inside the skin 2 is transmitted to the first temperature sensing element 31a and the second temperature sensing element 32c via the skin contact plates 14. Further, in the same manner, the heat flow Q inside the skin 2 is transmitted to the inlet 21a of the first heat flow path member 21 and the inlet 24a of the second heat flow path member 24 via the skin contact plates 14. Here, the skin contact plates 14 has a high thermal conductivity, and hence the thermal resistance can be ignored.

However, because the first heat flow path member 21 and the second heat flow path member 24 are thermal resistors, a thermal resistance R1 exists between the inlet 21a and the outlet 21b of the first heat flow path member 21, and the heat flow Q is transmitted to the first temperature sensing element 31b in contact with the outlet 21b of the first heat flow path member 21 as a heat flux Q1 that flows through the thermal resistance R1**.** Further, in the same manner, a thermal resistance R2 exists between the inlet 24a and the outlet 24b of the second heat flow path member 24, and the heat flow Q is transmitted to the second temperature sensing element 32g in contact with the outlet 24b of the second heat flow path member 24 as a heat flux Q2 that flows through the thermal resistance R2.

Here, the temperature measured by the first temperature sensing element 31a is defined as a temperature T1, and the temperature measured by the second temperature sensing element 32c is defined as a temperature T2. Further, the temperature measured by the first temperature sensing element 31b that is opposed to the first temperature sensing element 31a is defined as a temperature T3, and the temperature measured by the second temperature sensing element 32g that is opposed to the second temperature sensing element 32c is defined as a temperature T4.

Here, the first heat flow path member 21 has a thickness larger than the thickness of the second heat flow path member 24, and if thermal conductivities thereof are the same, the thermal resistance R1 of the first heat flow path member 21 and the thermal resistance R2 of the second heat flow path member 24 satisfy a relationship of R1>R2. That is, the thermal resistance R1 of the first heat flow path member 21 exists between the temperatures T1 and T3, while the thermal resistance R2 of the second heat flow path member 24 exists between the temperatures T2 and T4. If a fixed amount of heat flow Q is flowing from a deep body part of the skin 2 of the subject, a difference occurs between a temperature difference between the temperatures T1 and T3 and a temperature difference between the temperatures T2 and T4.

Here, assuming that a thermal resistance ratio K of the thermal resistance R1 between the temperatures T1 and T3 to the thermal resistance R2 between the temperatures T2 and T4 is R1/R2, it is possible to calculate a deep body temperature TB according to Expression 1 of FIG. 6 obtained by solving a known heat conduction equation. Here, if the first heat flow path member 21 and the second heat flow path member 24 have the same thermal conductivity and have a twofold difference in thickness as described above, the thermal resistance ratio K is obtained as K=R1/R2=2, and hence the deep body temperature TB can be calculated by measuring the temperatures T1, T2, T3, and T4. The temperature measuring device according to this embodiment thus calculates the deep body temperature.

Further, the first heat flow path member 21 and the second heat flow path members 22 to 25 are independently disposed, and as described above, are thermally isolated from one another by the casing 11 having the air layers 12, and hence it is possible to suppress plane-direction heat fluxes Q3 (indicated by the broken arrows) among the heat flow path members, which can prevent the heat flow Q from defusing in a plane direction and the heat flow path members from affecting one another. As a result, the deep body temperature can be calculated with an error suppressed to a minimum. Note that, the thermal resistance ratio K is not limited to "2". Further, if the thermal resistance ratio K between the first heat flow path member 21 and the second heat flow path member 24 is known, it is possible to equalize the height of the first heat flow path member 21 and the height of the second heat flow path member 24, which allows downsizing of the device.

### [Description of operation of temperature measuring device according to first embodiment: FIG. 5, FIG. 6, and FIG. 7]

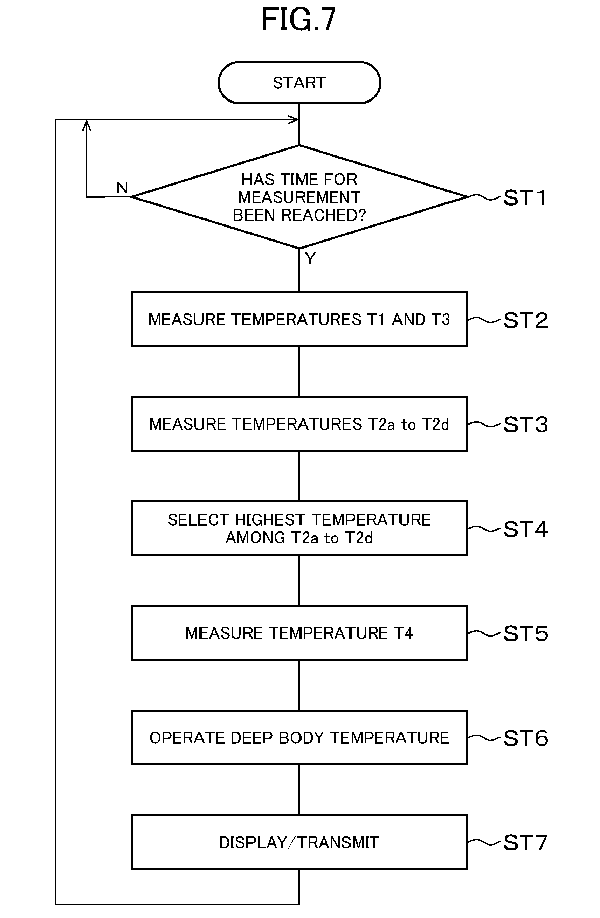

Next, referring to the flowchart of FIG. 7, description is made of an outline of the operation of the temperature measuring device according to the first embodiment. Note that, the internal configuration of the temperature measuring device is referred to FIG. 5, and the method of calculating the deep body temperature is referred to FIG. 6. Further, as preconditions for the description of the operation, it is assumed that the temperature measuring unit 10 is brought into close contact with the skin of the subject and the control unit 100 is in operation and is executing the measurement operation at predetermined time intervals.

In FIG. 7, the microcomputer 113 of the control unit 100 of the temperature measuring device 1 uses a time counter (not shown) provided therein to determine whether or not a start time for the measurement of the body temperature of the subject has been reached (Step ST1). Here, if the measurement time has not been reached, Step ST1 is repeated, and if the measurement time has been reached, the procedure advances to the subsequent Step ST2. Note that, an interval between the measurement times may be arbitrarily determined, and can be set to, for example, every 10 minutes or every hour.

Subsequently, if it is positively determined (to start measurement) in Step ST1, the microcomputer 113 causes the A/D conversion unit 112 to A/D-convert the temperature signal P1 measured by the first temperature sensing element 31a and the temperature signal P2 measured by the first temperature sensing element 31b and receives as an input the temperature data P11 being the digital information. The temperature information obtained here corresponds to the temperatures T1 and T3 illustrated in FIG. 6 (Step ST2).

Subsequently, the microcomputer 113 causes the A/D conversion unit 112 to A/D-convert the temperature signals P3 to P6 measured by the second temperature sensing elements 32a to 32d, respectively, and receives as an input the temperature data P11 being the digital information. The temperature information obtained here is defined as temperatures T2a to T2d (Step ST3).

Subsequently, the microcomputer 113 causes the arithmetic operation unit 114 to perform a comparison as to which of the temperatures T2a to T2d is the highest temperature and select the highest temperature as the temperature T2 (Step ST4). Here, the highest temperature is selected as the temperature T2 because the temperature sensing element that has measured the highest temperature is supposed to have measured the body temperature of the subject with the highest accuracy by being brought into contact with the skin of the subj ect most satisfactorily. Here, it is assumed that the highest temperature is the temperature T2c (that is, temperature measured by the second temperature sensing element 32c) .

That is, the temperature measuring device according to this embodiment can determine a close contact state between the skin contact plates 14 of the temperature measuring unit 10 and the skin of the subject, and has a function of performing the temperature measurement by finding a portion exhibiting a satisfactory contact state even if the skin contact plates 14 of the temperature measuring unit 10 is not brought into uniform contact with the skin of the subject to thereby resolve a problem of nonuniform contact with the skin.

Subsequently, the microcomputer 113 causes the A/D conversion unit 112 to A/D-convert the temperature signal P9 measured by the second temperature sensing element 32g, which is opposed to the second temperature sensing element 32c that has measured the highest temperature T2c, and receives as an input the temperature data P11 being the digital information. The temperature information obtained here corresponds to the temperature T4 (Step ST5) . That is, the temperature T4 is a temperature measured by the second temperature sensing element, which is opposed to the temperature sensing element that has measured the highest temperature among the second temperature sensing elements 32a to 32d, across the second heat flow path member.

Subsequently, the arithmetic operation unit 114 of the microcomputer 113 calculates the deep body temperature TB by substituting the temperatures T1, T2, T3, and T4, which have been acquired by the measurement, and the value of the thermal resistance ratio K into Expression 1 described above, and stores the deep body temperature TB in the memory 115 (Step ST6).

Subsequently, the microcomputer 113 transmits the stored deep body temperature TB to the display unit 120 as the display signal P13, and the display unit 120 displays the calculated deep body temperature (Step ST7). Further, if the temperature measuring device 1 has a specification to transmit the temperature information to an external device (not shown), the calculated deep body temperature is transmitted to the transmission/reception unit 116 as the communication signal P12, and the transmission/reception unit 116 performs transmission/reception with the external device in a wireless manner and sequentially transmits the measured temperature information.

Here, by providing the external device that receives the temperature information from the control unit 100 with a bulk memory or a monitor for performing graph display, it is possible to record the body temperature of the subject for a long period of time and possible to confirm a change in body temperature and the like in realtime. Therefore, it is possible to use the temperature measuring device according to this embodiment to perform the continuous measurement of the deep body temperature twenty-four hours a day and possible to use the external device that is placed in a position apart from the subject to continuously observe the subject's (patient's) condition and immediately handle an abrupt change in the condition or the like.

As described above, according to the temperature measuring device of the first embodiment, the heat flow path members corresponding to the temperature sensing elements are independently disposed, and the casing having the air layers extremely low in thermal conductivity thermally isolates the heat flow path members from each other, which can suppress the heat flux from the heat flow path member in a plane direction and hence enables measurement of the deep body temperature with high precision. Further, the skin contact plate having a high thermal conductivity is provided to each of the heat flow path members corresponding to the temperature sensing elements, and hence it is possible to perform the temperature measurement by selecting the skin contact plate whose contact state with the skin is most satisfactory at the time of the measurement and possible to realize the deep body temperature measurement that is stable and is hardly affected by the contact state with the skin. In addition, the heat flow path members (heat insulating materials) formed between the temperature sensing elements are downsized to thereby lower a heat capacity, resulting in improved responsiveness, which can reduce time for measurement after the attachment until the temperature rise to the body temperature.

### (Second embodiment)

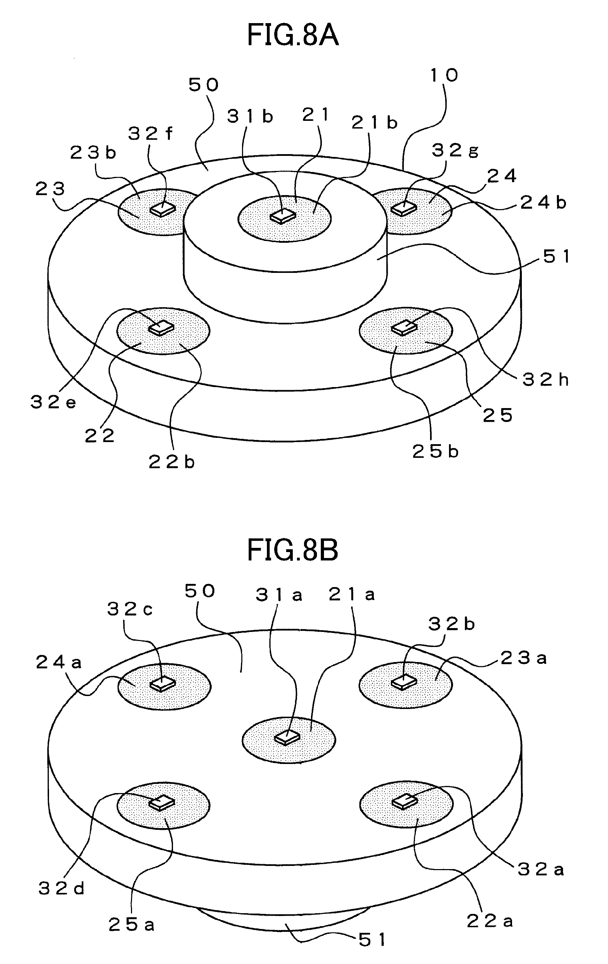

Next, referring to FIG. 8A and FIG. 8B, description is made of a structure of a temperature measuring device according to the second embodiment. FIG. 8A is a perspective view of the temperature measuring unit of the temperature measuring device according to the second embodiment when viewed obliquely from above, and FIG. 8B is a perspective view thereof when viewed obliquely from below (from a back surface thereof). Note that, the second embodiment has the same basic structure as the first embodiment, and hence the same components are denoted by the same reference symbols to partially omit duplicate description.

As illustrated in FIG. 8A and FIG. 8B, in the temperature measuring unit 10 of the temperature measuring device according to the second embodiment, the casing for isolating the heat flow path members from one another is made of a polystyrene foam 50 having a high thermal resistor. Here, the cylindrical first heat flow path member 21 having a large thickness which is located substantially at the center of the temperature measuring unit 10 and the cylindrical second heat flow path members 22 to 25 having a half thickness thereof which are disposed around the first heat flow path member 21 are the same as those of the first embodiment.

Further, the first temperature sensing element 31a is disposed on the inlet 21a of the heat flow path inside the first heat flow path member 21 of the back surface of the temperature measuring unit 10, and the first temperature sensing element 31b is disposed on the outlet 21b of the heat flow path inside the first heat flow path member 21 on the top surface of the temperature measuring unit 10. Further, the second temperature sensing elements 32a to 32d are disposed on the inlets 22a to 25a of the heat flow paths inside the second heat flow path members 22 to 25, respectively, and the second temperature sensing elements 32e to 32h are disposed on the outlets 22b to 25b of the heat flow paths inside the second heat flow path members 22 to 25, respectively. Note that, the first temperature sensing elements 31a and 31b and the second temperature sensing elements 32a to 32h are implemented and disposed on the FPC, but the illustration of the FPC is omitted in order to avoid the drawings from becoming complicated.

The polystyrene foam 50 holds the respective heat flow path members, and the heat flow path members are provided independently of one another with the side surfaces covered with the polystyrene foam 50. Further, because the first heat flow path member 21 in the central portion has a large thickness, the polystyrene foam 50 includes a convex portion 51 in the central portion in accordance with the thickness. With this structure, the first heat flow path member 21 and the second heat flow path members 22 to 25 are thermally isolated from one another by the polystyrene foam 50 being a high thermal resistor.

Further, although not shown, in the same manner as in the first embodiment, the back surface of the temperature measuring unit 10 according to the second embodiment is mostly covered with the heat insulating material 13, and the skin contact plates 14a to 14e are independently disposed in the positions corresponding to the first heat flow path member 21 and the second heat flow path members 22 to 25 (see FIG. 2).

Further, in the same manner as in the first embodiment, the control unit 100 is integrally connected to the temperature measuring unit 10 by being fitted over the temperature measuring unit 10 according to the second embodiment from the top surface (see FIG. 3) . The control unit 100 has a ring shape with the central portion hollowed so as to avoid the first heat flow path member 21 and the convex portion 51 of the polystyrene foam 50 which are tall and are provided at the center of the temperature measuring unit 10. Note that, the control unit may be of a separate type (see FIG. 4) as in the first embodiment.

As described above, the temperature measuring device according to the second embodiment has the same components as the first embodiment except that the casing is changed to the polystyrene foam 50. Accordingly, the temperature measuring device according to the second embodiment has the same features and excellent effects as in the first embodiment. Further, the polystyrene foam 50, which is the casing according to the second embodiment, has a higher thermal conductivity than the air layers included in the casing 11 according to the first embodiment, and hence the heat flux Q3 (see FIG. 6) in a plane direction is somewhat less suppressed, but the casing of the polystyrene foam 50 has excellent features that the casing has such a simpler structure as to be more easily wrought and is lower in cost, lighter weight, and easier to handle than the casing 11 according to the first embodiment.

Note that, the casing according to the second embodiment is not limited to the polystyrene foam, and may be any other material that has a high thermal resistor and a satisfactory workability. Further, an internal configuration and an operational flow of the second embodiment are the same as those of the first embodiment, and hence description thereof is omitted.

### (Third embodiment)

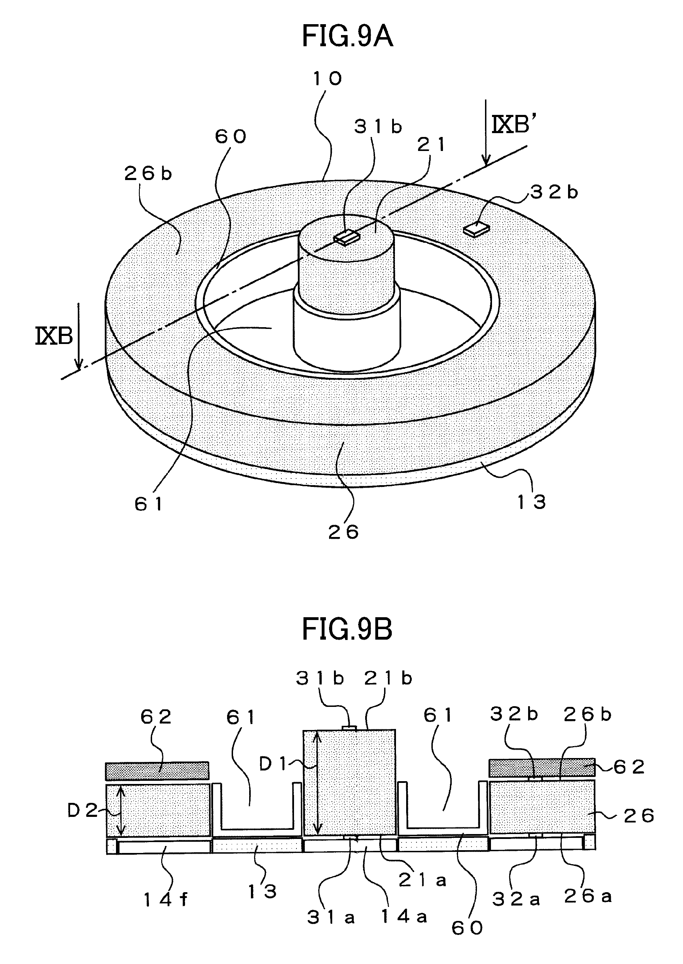

Next, referring to FIG. 9A and FIG. 9B, description is made of a structure of a temperature measuring device according to the third embodiment. FIG. 9A is a perspective view of the temperature measuring unit of the temperature measuring device according to the third embodiment when viewed obliquely from above, and FIG. 9B is a sectional view illustrating a section of the temperature measuring unit of FIG. 9A cut out by the cutting plane line IXB-IXB' that passes through its center. Note that, the third embodiment has the same basic structure as the first embodiment, and hence the same components are denoted by the same reference symbols to partially omit duplicate description.

In FIG. 9A and FIG. 9B, the temperature measuring unit 10 is structured of a casing 60, the first heat flow path member 21 located substantially at the center of the casing 60, a second heat flow path member 26, which is disposed so as to surround the periphery of the first heat flow path member 21, the first temperature sensing elements 31a and 31b, and the second temperature sensing elements 32a and 32b.

The casing 60 holds the first heat flow path member 21 by surrounding its side surface, and holds the second heat flow path member 26 in contact with its inner surface. A material of the casing 60 has a low thermal conductivity, and it is preferred to employ a rigid urethane foam, a polyvinyl chloride foam, or the like that are easy to mold. The casing 60 has a circular frame shape, and an internal portion of the casing 60 is made of a cavity formed of an air layer 61. Note that, the shape of the casing 60 is arbitrary, and the present invention is not limited thereto.

In the same manner as in the first embodiment, the first heat flow path member 21 is a cylindrical thermal resistor having a predetermined thermal conductivity, and has the inlet 21a of the heat flow path on the lower side of the figures and the outlet 21b of the heat flow path on the upper side of the figures. The second heat flow path member 26 is a thermal resistor integrated to have a ring shape, and is held by the casing 60 so as to surround the first heat flow path member 21. The second heat flow path member 26 has a predetermined thermal conductivity, and has an inlet 26a of the heat flow path on the lower side of the figures and an outlet 26b of the heat flow path on the upper side of the figures. Here, the first heat flow path member 21 has the thickness D1 set twice as large as the thickness D2 of the second heat flow path member 26.

With this structure, the first heat flow path member 21 and the second heat flow path member 26 are mechanically isolated from each other by the casing 60, and the air layer 61 is formed by the casing 60 between the two heat flow path members. Here, the air layer 61 has an extremely low thermal conductivity, and hence the first heat flow path member 21 and the second heat flow path member 26 are thermally isolated from each other by the air layer 61.

Further, the first temperature sensing element 31a is disposed in contact with the inlet 21a of the first heat flow path member 21, and the first temperature sensing element 31b is disposed in contact with the outlet 21b of the first heat flow path member 21. Therefore, the first temperature sensing elements 31a and 31b are disposed as a pair of temperature sensing elements that are opposed to each other at the inlet 21a and the outlet 21b of the first heat flow path member 21.

Further, the second temperature sensing element 32a is disposed substantially at the center in a width direction of the ring shape of the inlet 26a of the second heat flow path member 26, and the second temperature sensing element 32b is disposed on the outlet 26b of the second heat flow path member 26 in a position opposed to the second temperature sensing element 32a so as to form a pair therewith. Therefore, in the third embodiment, only one pair of second temperature sensing elements 32a and 32b are provided. Note that, the first temperature sensing elements 31a and 31b and the second temperature sensing elements 32a and 32b are implemented and disposed on the FPC, but the illustration of the FPC is omitted. Further, a heat insulating material (not shown) is disposed on the top surface of the outlet 21b of the first heat flow path member 21, thereby enabling such a structure as to prevent a heat flow that has passed through the first heat flow path member 21 from diffusing to the external device.

Further, FIG. 9B illustrates a thin metal plate 62 made of aluminum or the like having a ring shape, which is disposed in contact with the entire outlet 26b of the second heat flow path member 26. Therefore, the metal plate 62 is thermally coupled to the second heat flow path member 26 and the second temperature sensing element 32b, and has a function of sufficiently transmitting heat to the second temperature sensing element 32b. Note that, FIG. 9A omits the illustration of the metal plate 62.

Further, in the same manner as in the first embodiment, FIG. 9B illustrates the heat insulating material 13 that supports a back surface of the casing 60. Further, the skin contact plate 14a that has a circular shape and is located substantially at the center of the back surface of the casing 60 is the same as that of the first embodiment, and is brought into contact with and thermally coupled to the inlet 21a of the first heat flow path member 21 and the first temperature sensing element 31a. Further, a skin contact plate 14f has a ring shape in accordance with the shape of the second heat flow path member 26, and is brought into contact with and thermally coupled to the inlet 26a of the second heat flow path member 26 and the second temperature sensing element 32a. Note that, although not shown, also in the third embodiment, it is preferred that the top surface and side surface of the temperature measuring unit 10 be covered by a cover.

In this manner, the second heat flow path member 26 of the temperature measuring unit 10 according to the third embodiment has a ring shape, and the skin contact plate 14f in contact with the inlet 26a of the second heat flow path member 26 also has a ring shape, thereby providing only one pair of second temperature sensing elements 32a and 32b. Accordingly, the temperature measured by the second temperature sensing element 32a disposed on the inlet 26a of the second heat flow path member 26 corresponds to the temperature T2, and the temperature measured by the second temperature sensing element 32b disposed on the outlet 26b of the second heat flow path member 26 corresponds to the temperature T4. Note that, the temperatures T1 and T3 are the same as those of the first embodiment.

With this structure, as the operation for calculating the deep body temperature by the temperature measuring device according to the third embodiment, in the operational flow (see FIG. 7) according to the first embodiment, only the temperature measurement by the second temperature sensing element 32a is performed to acquire the temperature T2 in Step ST3, and the subsequent Step ST4 becomes unnecessary. Note that, the other steps of the operational flow are the same as those of the first embodiment.

As described above, in the third embodiment, even if the second temperature sensing elements are reduced to one pair of second temperature sensing elements 32a and 32b, the skin contact plate 14f has a ring shape, and hence the satisfactory temperature measurement can be performed irrespective of the close contact state between a temperature sensor and the skin (even if the position of the second temperature sensing element 32a is spaced apart from the skin). In addition, the temperature measuring unit 10 has a simple structure, and the operational flow of the measurement is also simple, which allows the temperature measuring device according to the third embodiment to be provided as a simplified temperature measuring device. Further, the heat flowpathmembers corresponding to the temperature sensing elements are independently disposed, and the first heat flow path member and the second heat flow path member are thermally isolated from each other by the casing including the air layer having an extremely low thermal conductivity, which can suppress the heat flux from the heat flow path members in a plane direction and measure the deep body temperature with high precision.

Further, the secondheat flowpathmember 26 and the skin contact plate 14f each have a ring shape whose size is approximately the same as an outer shape of the temperature measuring unit 10, and hence it is necessary to bring the back surface of the temperature measuring unit 10 into uniform contact with the skin in order to bring the skin contact plate 14f into contact with the skin of the subject more satisfactorily than the first and second embodiments. However, with care in this respect, it is possible to measure the deep body temperature with sufficient precision. Note that, if the casing 60 including the air layer 61 is replaced by the same polystyrene foam as that of the second embodiment, it is possible to obtain a temperature measuring device having a much simpler structure.

According to another embodiment of the present invention, the number of heat flow path members may be one as disclosed in JP 4310962 B. Also in this case, an air layer, a vacuum layer, or a polystyrene foam layer is formed between the heat flow path member and a surrounding casing. Further, the deep body temperature is calculated in the same manner as the calculation method disclosed in JP 4310962 B.

Note that, the block diagram, the flowcharts, and the like illustrated in the embodiments of the present invention are mere examples and the present invention is not limited thereto.

The temperature measuring device according to the present invention can measure the deep body temperature that is important in body temperature management, monitoring of a bloodstream state, and the like during a surgical operation with high precision, and therefore can be widely used in various medical institutions as a high-precision clinical thermometer for a deep body temperature that always provides suitable medical care to the subject.

While there have been described what are at present considered to be certain embodiments of the invention, it will be understood that various modifications may be made thereto, and it is intended that the appended claims cover all such modifications and do not limited to written embodiments themselves.

## Claims

1. A temperature measuring device, comprising:
a first heat flow path member;
a second heat flow path member;
temperature sensing elements provided to at least one of an inlet and an outlet of the first heat flow path member and at least one of an inlet and an outlet of the second heat flow path member; and
a casing having a lower thermal conductivity than a thermal conductivity of the first heat flow path member and a thermal conductivity of the second heat flow path member, for supporting the first heat flow path member and the second heat flow path member, in which one of a gaseous layer and a vacuum layer is formed between the first heat flow path member and the second heat flow path member.

2. The temperature measuring device according to claim 1, further comprising:
a pair of first temperature sensing elements that are opposed to each other at the inlet and the outlet of the first heat flow path member; and
a pair of second temperature sensing elements that are opposed to each other at the inlet and the outlet of the second heat flow path member.

3. The temperature measuring device according to claim 2, wherein:
the secondheat flowpathmember comprises apluralityof second heat flow path members; and
the plurality of second heat flow path members and the first heat flow path member are thermally isolated from one another by the casing.

4. The temperature measuring device according to claim 2, wherein:
the second heat flow path member is integrally formed to have a ring shape; and
the second heat flow path member and the first heat flow path member are thermally isolated from each other by the casing.

5. The temperature measuring device according to claim 1, wherein the casing is made of a polystyrene foam.

6. The temperature measuring device according to any one of claims 1 to 5, wherein:
the inlets of the first heat flow path member and the second heat flow path member each comprise a surface that is brought into contact with an object to be measured; and
the first temperature sensing element and the second temperature sensing element that are provided to the inlets are thermally coupled to skin contact plates made of a metallic material.

7. The temperature measuring device according to claim 6, wherein the skin contact plates are independently disposed on the first temperature sensing element and the second temperature sensing element on a one-to-one basis.

8. The temperature measuring device according to claim 1, wherein:
the pair of second temperature sensing elements comprises a plurality of pairs of second temperature sensing elements;
a measured value of a second temperature sensing element that has measured the highest temperature among the plurality of pairs of second temperature sensing elements is employed as the measured value of the second temperature sensing element; and
the measured value of the second temperature sensing element, the measured value of the first temperature sensing element, and a thermal resistance ratio between the first heat flow path member and the second heat flow path member are used to calculate a deep temperature.
